# EUROPEAN PATENT SPECIFICATION

(11) **EP 2 375 554 B1**
(45) Date of publication and mention of the grant of the patent: **30.05.2018**
(21) Application number: 11161344.4
(22) Date of filing: 06.04.2011
(51) Int. Cl.: H02M 3/156, H02M 1/36, H05B 33/08

(54) **Lighting device and illumination fixture using the same**
Beleuchtungsvorrichtung und Beleuchtungsbefestigung damit
Dispositif d'éclairage et accessoire d'éclairage l'utilisant

(30) Priority: 08.04.2010 JP 2010089634
(43) Date of publication of application: 12.10.2011
(73) Proprietor: Panasonic Intellectual Property Management Co., Ltd., Osaka-shi, Osaka 540-6207 (JP)
(72) Inventor: Kuroki, Yosifumi, Osaka (JP); Hiramatu, Akinori, Nara Nara (JP); Mizukawa, Hiromitsu, Osaka (JP)
(74) Representative: Rüger, Barthelt & Abel

(56) References cited:
- US-A1- 2010 019 697
- US-B2- 6 762 563

## Description

### [Field of the Invention]

The present invention relates to a lighting device for performing DC lighting control of a semiconductor light-emitting element lighted with a DC current of a light-emitting diode (LED) or the like, and an illumination fixture using the same.

### [Background Art]

As disclosed in JP 2008-278641A, in conventional lighting devices that supply a DC current from an input DC power source to a semiconductor light-emitting element through a switching power source circuit, at power-on, the DC current supplied from the input DC power source through the semiconductor light-emitting element as a starting current is fed to a control power source circuit of the switching power source circuit to start a switching operation of the switching power source circuit, and then, a feedback current from the switching power source circuit is supplied to the control power source circuit. Thereby, it is controlled so that the switching operation is started when the semiconductor light-emitting element is connected and the switching operation is not started when the semiconductor light-emitting element is not connected.

US 6 762 563 B2 discloses A lighting device comprising a DC-DC converting circuit for converting a DC voltage between input terminals and outputting the DC voltage between output terminals. A smoothing capacitor is connected between one output terminal and ground. A series connection of a resistor, forming a DC current carrying element, and a switch (transistor) is connected parallel to the smoothing capacitor adapted to control discharging of the smoothing capacitor (compare particularly fig. 8 of US 6 762 563 B2).

### [Disclosure of the Invention]

### [Problems to be solved by the Invention]

A switching power source circuit in JP 2008-278641A includes a smoothing capacitor at an output terminal. To stabilize an optical output, it is preferred that the capacity of the smoothing capacitor is large. However, at lighting-off control or dimming control, while an electric charge remains in the smoothing capacitor, the optical output of the semiconductor light-emitting element does not lower, possibly making an impression that control responsibility is poor on a user. Thus, it can be considered to connect a remaining-charge discharging resistor in parallel to the smoothing capacitor.

However, when the remaining-charge discharging resistor is connected in parallel to the smoothing capacitor, even if the semiconductor light-emitting element is not connected, a switching operation may be started by a DC current supplied through the remaining-charge discharging resistor.

With a configuration disclosed JP 2008-278641A, when the smoothing capacitor provided at the output terminal of the switching power source circuit has a large capacity, the switching power source circuit may be started by a charging current flowing through the smoothing capacitor at power-on. In this case, a problem occurs that even if the semiconductor light-emitting element is not connected, the switching operation is maintained by a feedback current from the switching power source circuit. Further, with a configuration disclosed in JP 2008-278641A, a problem occurs that even if the semiconductor light-emitting element is disconnected after start of the switching operation, the switching operation is maintained by the feedback current from the switching power source circuit.

To solve these problems, an object of the present invention is to provide a lighting device capable of reliably detecting existence or absence of load connection.

### [Means adapted to solve the Problems]

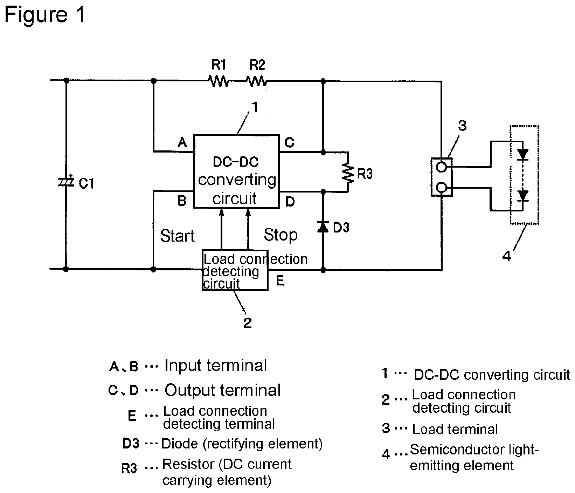

To attain the above-mentioned object, a lighting device according to a first aspect of the present invention, as shown in Fig. 1, includes a DC-DC converting circuit 1 for converting a DC voltage between input terminals A and B and outputting the DC voltage between output terminals C and D, a DC current carrying element (resistor R3) parallel-connected between the output terminals C and D, a load terminal 3 to which a semiconductor light-emitting element 4 lighted by a DC current supplied from the output terminals C and D is connected, a load connection detecting circuit 2 forming a path for passing the DC current from the input terminals A and B through the load terminal 3 and the semiconductor light-emitting element 4, and a rectifying element (diode D3) connected between the load terminal 3 and the DC current carrying element (resistor R3), the rectifying element blocking a path for passing the DC current from the input terminals A and B to the load connection detecting circuit 2 through the DC current carrying element (resistor R3).

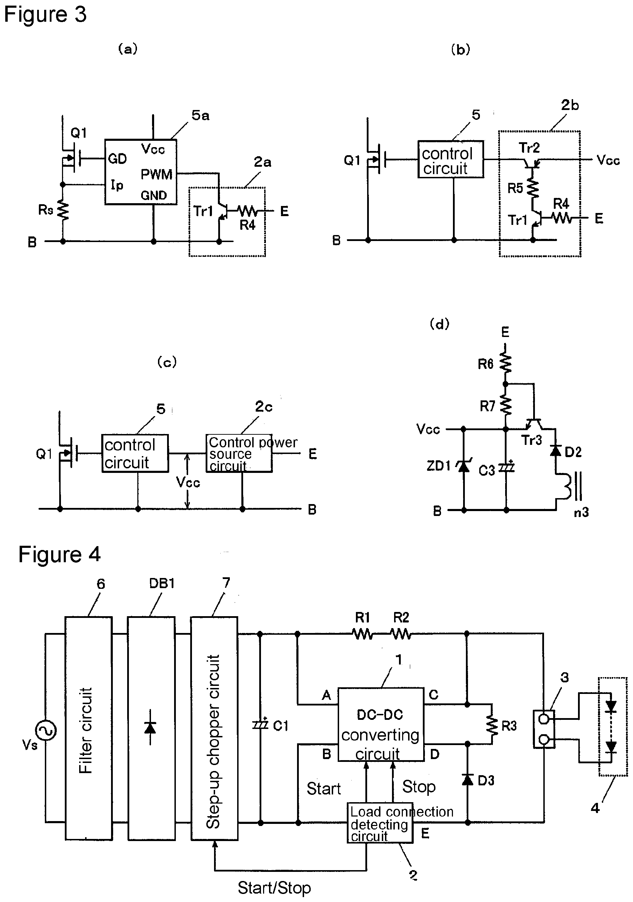

According to a second aspect of the present invention, in the lighting device according to the first aspect of the present invention, as shown in Fig. 3(a), the load connection detecting circuit 2a is a starting circuit for starting the DC-DC converting circuit 1 when the DC current passing through the semiconductor light-emitting element 4 is detected.

According to a third aspect of the present invention, in the lighting device according to the first or second aspect of the present invention, as shown in Fig. 3(a), the load connection detecting circuit 2a is a stop circuit for stopping the DC-DC converting circuit 1 when the DC current passing through the semiconductor light-emitting element 4 is not detected.

According to a fourth aspect of the present invention, in the lighting device according to any of the first to third aspects of the present invention, as shown in Fig. 3(b), the load connection detecting circuit 2b is a circuit for switching existence or absence of supply of a control power source voltage Vcc to the DC-DC converting circuit 1 according to existence or absence of the DC current passing through the semiconductor light-emitting element 4.

According to a fifth aspect of the present invention, in the lighting device according to any of the first to fourth aspects of the present invention, as shown in Fig. 3(c), the load connection detecting circuit is a control power source circuit 2c for supplying a control power source voltage Vcc to the DC-DC converting circuit 1 using the DC current passing through the semiconductor light-emitting element 4 as a power source.

According to a sixth aspect of the present invention, in the lighting device according to the fifth aspect of the present invention, as shown in Fig. 3(d), the control power source circuit 2c has means (transistor Tr3) adapted to use a feedback current (output of a winding n3) from the DC-DC converting circuit 1 as a power source and block the feedback current when the DC current passing through the semiconductor light-emitting element 4 is not detected during operation of the DC-DC converting circuit 1.

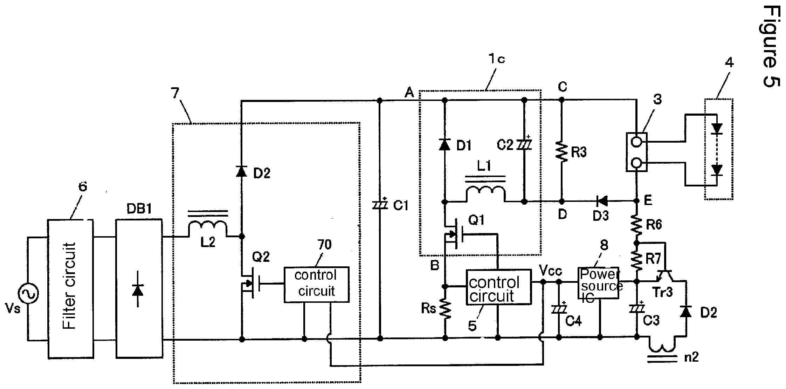

According to a seventh aspect of the present invention, in the lighting device according to any of the first to sixth aspects of the present invention, as shown in Figs. 4 and 5, the DC voltage between the input terminals A and B is an output voltage of a step-up chopper circuit 7 and the load connection detecting circuit 2 controls start/stop of the step-up chopper circuit 7 according to existence or absence of the DC current passing through the semiconductor light-emitting element 4.

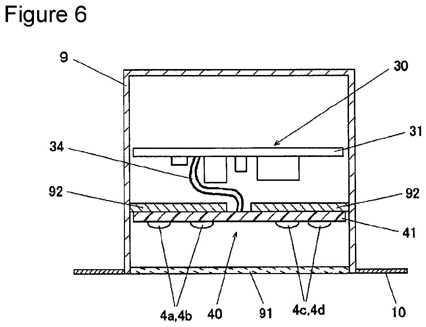

An eighth aspect of the present invention is an illumination fixture having the lighting device according to any of the first to seventh aspects of the present invention (Fig. 6).

### [Effect of the Invention]

According to the first aspect of the present invention, in the lighting device that detects existence or absence of load connection according to existence or absence of the DC current passing through the semiconductor light-emitting element, by providing a rectifying element for blocking the DC current flowing through the DC current carrying element connected between the output terminals of the DC-DC converting circuit, existence or absence of load connection can be reliably detected. Thus, even when the large-capacity smoothing capacitor and its discharging resistor are parallel-connected between the output terminals of the DC-DC converting circuit, the DC current does not flow to the load connection detecting circuit through these circuit elements, and therefore, wrong detection can be prevented.

According to the second and third aspects of the present invention, even when the DC-DC converting circuit is a self-excited or separately-excited type, the present invention can be applied.

According to the fourth and fifth aspects of the present invention, even when the control circuit of the DC-DC converting circuit has no switching control terminal for switching between oscillation stop and oscillation permission, start/stop of the DC-DC converting circuit can be switched by switching supply/blockage of the control power source voltage.

According to the sixth aspect of the present invention, even when the semiconductor light-emitting element is disconnected after the DC-DC converting circuit starts its operation, it can be prevented that supply of the control power source voltage is continued by blocking the feedback current from the DC-DC converting circuit.

According to the seventh aspect of the present invention, when load connection is not detected, the voltage in the circuit can be reduced. Further, power loss can be reduced by stopping the step-up chopper circuit.

According to the eighth aspect of the present invention, it is possible to provide the illumination fixture that can reliably stop the lighting device when load connection is not detected.

### [Brief Description of the Drawings]

[Fig. 1] Fig. 1 is a circuit diagram showing a lighting device in accordance with a first embodiment of the present invention.
[Fig. 2] Figs. 2(a) to 2(c) are circuit diagrams showing configuration examples of a DC-DC converting circuit used in the lighting device in accordance with a first embodiment of the present invention.
[Fig. 3] Figs. 3(a) to 3(d) are circuit diagrams showing configuration examples of a load connection detecting circuit used in the lighting device in accordance with the first embodiment of the present invention.
[Fig. 4] Fig. 4 is a circuit diagram showing a schematic configuration of a lighting device in accordance with a second embodiment of the present invention.
[Fig. 5] Fig. 5 is a circuit diagram showing a specific configuration of the lighting device in accordance with the second embodiment of the present invention.
[Fig. 6] Fig. 6 is a sectional view showing an illumination fixture in accordance with a third embodiment of the present invention.

### [Best Mode for Carrying Out the Invention]

### (First embodiment)

Fig. 1 is a circuit diagram showing a lighting device in accordance with a first embodiment of the present invention. The lighting device includes a DC-DC converting circuit 1 for voltage-converting a DC voltage of a capacitor C1 as an input DC power source. Here, it is assumed that the capacitor C1 as the input DC power source is charged with a DC voltage of a commercial power source (100V, 50/60Hz) that is rectified by a full-wave rectifier and raised to a few hundreds of V by a power-factor improving step-up chopper circuit.

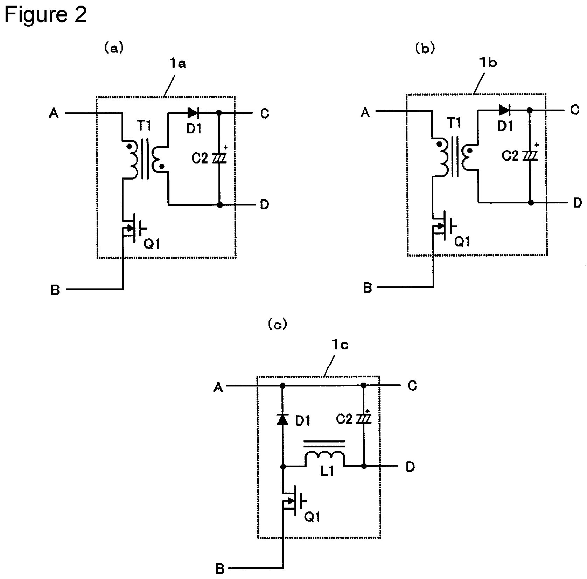

The DC-DC converting circuit 1 is a step-down converter (down converter) that lowers the DC voltage between input terminals A and B and outputs the lowered voltage to between output terminals C and D. The specific circuit configuration will be described below with reference to Fig. 2(a) to 2(c). The circuit 1 generally includes a smoothing output capacitor C2 between the output terminals C and D. To rapidly discharge the electric charge of the output capacitor C2 at light-off control or dimming control for improvement of responsibility, a resistor R3 having an appropriate resistance value is parallel-connected between the output terminals C and D.

A load terminal 3 is connected between the output terminals C and D via a backflow preventing diode D3. A semiconductor light-emitting element 4 is connected to the load terminal 3. The semiconductor light-emitting element 4 may be an LED module formed of a plurality of series-connected, parallel-connected or series-parallel-connected LEDs. Given that a forward voltage of each LED is Vf and the number of series-connected LEDs is n, a voltage between both ends of the semiconductor light-emitting element 4 becomes n × Vf. When the semiconductor light-emitting element 4 is properly connected to the load terminal 3, the voltage between both ends of the load terminal 3 becomes n × Vf. As described above, since the DC-DC converting circuit 1 is a step-down converter (down converter), the DC voltage of the capacitor C1 as an input DC power source is set to be higher than n × Vf.

When the DC-DC converting circuit 1 is an input/output insulating converter as shown in Figs. 2(a) and 2(b), a series circuit formed of resistors R1, R2 connected between the input terminal A and the output terminal C is a high-impedance DC current carrying circuit for ensuring a path in which a DC current passes between an input and an output. When a step-down chopper circuit as shown in Fig. 2(c) is used as the DC-DC converting circuit 1, a short-circuit may occur between the input terminal A and the output terminal C.

A load connection detecting circuit 2 is connected between a connecting point (terminal E) of the load terminal 3 and the backflow preventing diode D3, and the input terminal B. This load connection detecting circuit 2 is a circuit that detects existence or absence of load connection depending on whether or not the DC voltage is detected between the load connection detecting terminal E and the input terminal B. The specific circuit configuration will be described below with reference to Figs. 3(a) to 3(d). In summary, the circuit only requires a function of starting an oscillating operation of the DC-DC converting circuit 1 when a DC current path from a positive electrode of the capacitor C1 as the input DC power source to a negative electrode of the capacitor C1 through the input terminal A, (the resistors R1, R2), the output terminal C, the load terminal 3, the semiconductor light-emitting element 4, the load terminal 3, the load connection detecting terminal E, the load connection detecting circuit 2 and the input terminal B is established, and stopping the oscillating operation of the DC-DC converting circuit 1 when the DC current path is blocked.

Although the backflow preventing diode D3 is connected between the output terminal D and the load terminal 3 in the circuit shown in Fig. 1, the backflow preventing diode D3 may be connected between the output terminal C and the load terminal 3. Without the backflow preventing diode D3, the DC current passing through the resistor R3 is supplied between the terminals E and B. By providing the backflow preventing diode D3, the path for supplying the DC current to between the terminals B and E is limited to a path through the load terminal 3 and the semiconductor light-emitting element 4 and thus, connection failure and existence or absence of a brake in this path can be reliably detected.

The specific circuit configuration of the DC-DC converting circuit 1 in Fig. 1 is illustrated in Figs. 2(a) to 2(c). Fig. 2(a) shows a flyback converter circuit 1a, Fig. 2(b) shows a forward converter circuit 1b and Fig. 2(c) shows a step-down chopper circuit 1c. These are merely examples and any circuit configuration that can lower the DC voltage between the input terminals A and B and output the lowered voltage to between the output terminals C and D may be employed. Further, as shown in Fig. 2(c), any one of the input terminals A and B and any one of the output terminals C and D may be one common terminal.

The flyback converter circuit 1a in Fig. 2(a) includes a transformer T1, a switching element Q1, a diode D1 and a capacitor C2. One end of a primary winding of the transformer T1 is connected to the input terminal A. The other end of the primary winding of the transformer T1 is connected to the input terminal B through the switching element Q1. One end of a secondary winding of the transformer T1 is connected to an anode of the diode D1. A cathode of the diode D1 is connected to the output terminal C. The capacitor C2 is connected between the output terminals C and D. The other end of the secondary winding of the transformer T1 is connected to the output terminal D. The primary winding and the secondary winding of the transformer T1 are wound in directions shown by black circles shown in this figure.

The operation of the flyback converter circuit 1a is publicly known. When the input DC voltage is applied to the primary winding of the transformer T1 at turn-on of the switching element Q1, a voltage corresponding to a turn ratio occurs at the secondary winding. However, since the secondary winding is connected to a polarity at which the diode D1 is blocked, no charging current flows to the capacitor C2 and electromagnetic energy is accumulated in the transformer T1. When the switching element Q1 is turned off, a counter electromotive force due to the electromagnetic energy accumulated in the transformer T1 occurs. Since the counter electromotive force occurs in a direction of bringing the diode D1 into conduction, the electromagnetic energy accumulated in the transformer T1 is discharged to the capacitor C2. By variably controlling the ON/OFF cycle or an ON time width of the switching element Q1, electric power supplied to an output side can be properly controlled.

The forward converter circuit 1b in Fig. 2(b) is obtained by reversing the winding direction of the secondary winding of the transformer T1 in Fig. 2(a), and the diode D1 is brought into conduction at turn-on of the switching element Q1. When the input DC voltage is applied to the primary winding of the transformer T1 at turn-on of the switching element Q1, a voltage corresponding to the turn ratio occurs at the secondary winding, the diode D1 is brought into conduction and a charging current flows to the capacitor C2. At turn-off of the switching element Q1, the diode D1 is put into the blocked state. By variably controlling the ON/OFF cycle or the ON time width of the switching element Q1, electric power supplied to an output side can be properly controlled.

The step-down chopper circuit 1c in Fig. 2(c) includes the switching element Q1, an inductor L1, the diode D1 and the capacitor C2. A cathode of the diode D1 and a positive electrode of the capacitor C2 are connected to the input terminal A and the output terminal C. A negative electrode of the capacitor C2 and one end of the inductor L1 are connected to the output terminal D. The other end of the inductor L1 is connected to the anode of the diode D1. A connecting point of the anode of the diode D1 and the inductor L1 is connected to the input terminal B through the switching element Q1.

The operation of the step-down chopper circuit 1c is publicly known. When the switching element Q1 is turned on, a DC current flows in a path of the input terminal A, the capacitor C2, the inductor L1, the switching element Q1 and the input terminal B in this order and electromagnetic energy is accumulated in the inductor L1. When the switching element Q1 is turned off, a counter electromotive force due to the electromagnetic energy accumulated in the inductor L1 occurs, a regenerative current flows in a path of the inductor L1, diode D1, the capacitor C2 and the inductor L1 in this order and the electromagnetic energy in the inductor L1 is discharged. By repeating this operation, the DC voltage obtained by lowering the DC voltage between the input terminals A and B can be acquired between the output terminals C and D. By variably controlling the ON/OFF cycle or ON time width of the switching element Q1, electric power supplied to the output side can be properly controlled.

Next, the specific circuit configuration of the load connection detecting circuit 2 in Fig. 1 is illustrated in Figs. 3(a) to 3(d). The switching element Q1 refers to the switching element of the DC-DC converting circuit 1 (refer to Figs. 2(a) to 2(c)).

A load connection detecting circuit 2a in Fig. 3(a) is formed of a transistor Tr1 and a resistor R4. Abase of the transistor Tr1 is connected to the load connection detecting terminal E through the resistor R4. An emitter of the transistor Tr1 is connected to a ground terminal GND of a control integrated circuit 5a and the input terminal B of the DC-DC converting circuit 1. When the DC voltage is applied between the terminals E and B, the transistor Tr1 is turned on. When the DC voltage applied between the terminals E and B disappears, the transistor Tr1 is turned off. Turn-on of the transistor Tr1 acts as a starting signal for the control integrated circuit 5a and turn-off of the transistor Tr1 acts as a stop signal for the control integrated circuit 5a.

The control integrated circuit 5a in Fig. 3(a) includes a PWM terminal for intermittedly turning on/off the high-frequency oscillating operation with low frequency. This PWM terminal is pulled up to the level of a control power source voltage Vcc on a steady basis, is allowed to oscillate when becoming a Low level at turn-on of the external transistor Tr1 and stops its oscillation when becoming a High level at turn-off of the transistor Tr1. When the PWM terminal is at a Low level, a high-frequency ON/OFF control signal is inputted to a gate drive terminal GD, and the switching element Q1 of the DC-DC converting circuit 1 is driven to be turned on/off with high frequency. The control integrated circuit 5a may include a peak current detecting terminal Ip for monitoring a voltage between both ends of a current detecting resistor Rs while the switching element Q1 is turned on, to perform a peak current control function of turning off the switching element Q1 when a predetermined current value is reached. As an example of the control integrated circuit 5a having such function, UB A3070 manufactured by Philips Co., Ltd. can be adopted. It is assumed that a stable low DC voltage as the control power source voltage Vcc in Fig. 3(a) is supplied from a control power source circuit not shown.

A load connection detecting circuit 2b in Fig. 3(b) is formed of transistors Tr1, Tr2 and resistors R4, R5. Abase of the transistor Tr1 is connected to the load connection detecting terminal E through the resistor R4. An emitter of the transistor Tr1 is connected to a ground terminal of a control circuit 5 and the input terminal B of the DC-DC converting circuit 1. A collector of the transistor Tr1 is connected to a base of the transistor Tr2 through the resistor R5. An emitter of the transistor Tr2 is connected to the control power source voltage Vcc. A collector of the transistor Tr2 is connected to a control power source terminal of the control circuit 5. It is assumed that a stable low DC voltage as the control power source voltage Vcc in Fig. 3(b) is supplied from a control power source circuit not shown.

When the DC voltage is applied between the terminals E and B, the transistors Tr1, Tr2 are turned on and the control power source voltage Vcc is supplied to the control circuit 5. When the DC voltage applied between the terminals E and B disappears, the transistors Tr1, Tr2 are turned off and the control power source voltage Vcc supplied to the control circuit 5 is blocked. That is, supply of the control power source voltage Vcc to the control circuit 5 acts as a starting signal for the DC-DC converting circuit 1. And, blocking of the control power source voltage Vcc supplied to the control circuit 5 acts as the stop signal for the DC-DC converting circuit 1.

Next, in an example shown in Fig. 3(c), a control power source circuit 2c itself is the load connection detecting circuit. For example, the control power source circuit 2c in Fig. 3(c) may be a three-terminal regulator IC or may be a control power source circuit using an IPD (Intelligent Power Device). When the DC voltage is supplied between the load connection detecting terminal E and the input terminal B, the control power source circuit 2c converts the DC voltage into a stable low DC voltage, outputs the voltage as the control power source voltage Vcc and supplies the control power source voltage Vcc to a control power source terminal of the control circuit 5.

In the example shown in Fig. 3(b) or Fig. 3(c), the same function as in Fig. 3(a) can be achieved by using the control circuit 5 without the PWM terminal for controlling oscillation permission/oscillation stop from the outside. It is preferred that the control circuit 5 in Fig. 3(b) or Fig. 3(c) has a power source monitoring function of starting oscillation when the control power source voltage becomes higher than a first voltage Vth1 and stopping oscillation when the control power source voltage becomes lower than a second voltage Vh2 that is lower than the first voltage Vth1. Many commercially available switching regulator control IC have such power source monitoring function.

A specific circuit configuration of the control power source circuit 2c in Fig. 3(c) is shown in Fig. 3(d). This power source circuit includes resistors R6, R7, a power source capacitor C3, a Zener diode ZD1, a transistor Tr3, a diode D2 and a current feedback winding n3. In this example, the current feedback winding n3 is added to the transformer T1 of the DC-DC converting circuit in Fig. 2(a) to efficiently ensure the control power source voltage Vcc at stable lighting by using the feedback current. When the DC voltage is supplied between the load connection detecting terminal E and the input terminal B, the capacitor C3 is charged through the resistors R6, R7. When the charging voltage of the capacitor C3 becomes higher than the first voltage Vth1 of the power source monitoring function of the control circuit 5, the high-frequency ON/OFF control signal is supplied from the control circuit 5 to the switching element Q1 to start the DC-DC converting circuit. Thereby, the feedback current can be obtained from the current feedback winding n3. When the DC voltage is supplied between the load connection detecting terminal E and the input terminal B, since the transistor Tr3 is forward biased by the resistor R7 and is turned on, the capacitor C3 is charged from the current feedback winding n3 through the diode D2 and the transistor Tr3. The charging voltage of the capacitor C3 is restricted by the Zener diode ZD1. Thereby, the control power source voltage Vcc is efficiently ensured.

Next, when connection failure or break of the path passing through the load terminal 3 and the semiconductor light-emitting element 4 occurs, the load connection detecting terminal E in Fig. 1 is opened. Thus, a bias current through the resistor R7 disappears, turning off the transistor Tr3. For this reason, the charging current supplied from the current feedback winding n3 to the capacitor C3 disappears and the voltage of the capacitor C3 gradually lowers. Then, when the voltage of the capacitor C3 becomes lower than the second voltage Vth2 of the power source monitoring function of the control circuit 5, oscillation of the control circuit 5 stops and the high-frequency ON/OFF control signal supplied to the switching element Q1 also stops. As a result, the DC-DC converting circuit stops. The feedback current from the current feedback winding n3 of the transformer T1 also stops.

As a matter of course, the current feedback winding n3 in Fig. 3(d) may be provided at the transformer T1 in Fig. 2(b) or the inductor L1 in Fig. 2(c). The transistor Tr3 that blocks a current of the current feedback winding n3 is not limited to a bipolar type and may be an MOS type as long as it is connected to be turned on by the DC voltage between the terminals E and B.

Although the above description is made on an assumption that the DC-DC converting circuit 1 is a separately excited converter, it may be a self-excited converter. In this case, start/stop of the converter may be controlled according to existence or absence of the DC voltage between the terminals E and B.

In the present embodiment, although the resistor R3 for discharging the remaining charge in the smoothing capacitor C2 at the output terminal of the DC-DC converting circuit 1 is exemplified as the DC current carrying element connected between the output terminals C and D, the DC current carrying element is not limited to the resistor R3. For example, a Zener diode for suppressing an overvoltage at break of the load may be parallel-connected to the output terminal of the DC-DC converting circuit 1. The Zener diode in this case is also the DC current carrying element.

The DC current carrying element connected between the output terminals C and D is not limited to a circuit element having a steady DC current carrying capability and may be a circuit element having a transient DC current carrying capability, in which an integrated value of the DC current transiently flowing at an initial stage of power-on exceeds a predetermined value. The present invention can be applied to this case. For example, with configurations shown in Figs. 3(c) and 3(d), when the capacity of the output capacitor C2 of the DC-DC converting circuit 1 is set so large that the voltage of the power source capacitor C3 exceeds the first voltage Vth1 of the control circuit 5 at the initial stage of power-on, the output capacitor C2 can be said as a transient DC current carrying element. On the contrary, since the output capacitor of the switching power source circuit JP 2008-278641A does not have such a large capacity to charge the power source capacitor of the control power source circuit up to the operation starting voltage of the control circuit at the initial stage of power-on, the output capacitor does not correspond to the transient DC current carrying element herein.

In the present embodiment, the step-down converter (down converter) is used as the DC-DC converting circuit 1 on an assumption that the semiconductor light-emitting element 4 has a diode characteristic with a predetermined conducting threshold. In the case where the semiconductor light-emitting element 4 has an ohmic resistor or is an LED module in which a high resistance for detecting load connection is parallel-connected to an LED series circuit, even when the DC-DC converting circuit 1 is a step-up converter (up converter), it is possible to detect existence or absence of load connection before start.

### (Second embodiment)

Fig. 4 is a circuit diagram showing a lighting device in accordance with a second embodiment of the present invention. The present embodiment is different from the first embodiment in that start/stop of a step-up chopper circuit 7 for raising the DC voltage of the capacitor C1 as the input DC power source is controlled according to detection of existence/absence of load connection by the load connection detecting circuit 2.

A full-wave rectifier DB1 is connected to the commercial power source Vs (100V, 50/60Hz) through a filter circuit 6. To improve input power factor, an output of the full-wave rectifier DB1 is connected to the step-up chopper circuit 7. The step-up chopper circuit 7 charges the capacitor C1 with the DC voltage that is higher than a peak value of a pulsating voltage obtained by full-wave rectifying the voltage of the commercial power source.

It is undesired that, when the DC-DC converting circuit 1 is stopped by the load connection detecting circuit 2, the DC voltage of the capacitor C1 is kept in a raised state. Thus, in the present embodiment, when the load connection detecting circuit 2 does not detect load connection, the stop signal is fed to the step-up chopper circuit 7, thereby causing the step-up chopper circuit 7 to stop a voltage raising operation. When the load connection detecting circuit 2 detects load connection, the starting signal is fed to the step-up chopper circuit 7, thereby causing the step-up chopper circuit 7 to start the voltage raising operation.

Fig. 5 shows a more specific circuit configuration in the present embodiment. The step-down chopper circuit 1c in Fig. 2(c) is used as the DC-DC converting circuit 1 in Fig. 4. The configuration shown in Fig. 3(d) is used as the load connection detecting circuit 2 in Fig. 4. Although the secondary winding of the inductor L1 of the step-down chopper circuit 1c is used as a current feedback winding n2, the secondary winding of an inductor L2 of the step-up chopper circuit 7 may be used. To stabilize the voltage of the capacitor C3, a power source IC8 such as a three-terminal regulator and a capacitor C4 are added in place of the Zener diode ZD1 in Fig. 3(d).

The step-up chopper circuit 7 includes the inductor L2, the diode D2, a switching element Q2 and a control circuit 70. One end of the inductor L2 is connected to a positive output terminal of the full-wave rectifier DB1. The other end of the inductor L2 is connected to an anode of the diode D2 and one end of the switching element Q2. The other end of the switching element Q2 is connected to a negative output terminal of the full-wave rectifier DB1 and the negative electrode of the capacitor C1. A cathode of the diode D2 is connected to the positive electrode of the capacitor C1.

The operation of the step-up chopper circuit 7 is publicly known. When the switching element Q2 is turned on, a current flows from the positive output terminal of the full-wave rectifier DB1 to the negative output terminal of the full-wave rectifier DB1 through the inductor L2 and the switching element Q2, thereby drawing the input current from the commercial power source Vs. When the switching element Q2 is turned off, a counter electromotive force in the inductor L2 is superimposed onto the output voltage of the full-wave rectifier DB1 and the capacitor C1 is charged through the diode D2. Also at this time, the input current is drawn from the commercial power source Vs. Since the ON/OFF frequency of the switching element Q2 is sufficiently higher than the frequency of the commercial power source Vs and a high-frequency component of the input current is removed by the filter circuit 6, an input current waveform becomes similar to an input voltage waveform, improving the input power factor.

This step-up chopper circuit 7 is necessary for improving the input power factor. However, since the input current is small in the case of small power consumption, even when the voltage raising operation is stopped, negative effect on the input power factor is small. Thus, when the DC voltage is not detected by the load connection detecting terminal E, the operation of the step-down chopper circuit 1c as well as the step-up chopper circuit 7 is stopped. Thereby, the capacitor C1 is prevented from being charged with the raised DC voltage at stop of the step-down chopper circuit 1c. Moreover, circuit loss in the step-up chopper circuit 7 can be avoided.

Since the control power source voltage Vcc of the capacitor C4 is zero immediately after power-on, the step-up chopper circuit 7 stops its operation and the capacitor C1 is charged up to a peak value (about 140V) of the output voltage of the full-wave rectifier DB1 through the inductor L2 and the diode D2. Thus, the DC current flows in a path of the positive electrode of the capacitor C1, the terminal A, the terminal C, the load terminal 3, the semiconductor light-emitting element 4, the load terminal 3, the terminal E, the resistor R6, the resistor R7, the capacitor C3 and the negative electrode of the capacitor C1 to charge the capacitor C3. The voltage of the capacitor C3 rises and the capacitor C4 can obtain the stable DC voltage through the power source IC8. By supplying the DC voltage as the control power source voltage Vcc to the control circuit 5 and the control circuit 70, the step-down chopper circuit 1c and the step-up chopper circuit 7 start their operation. Thereby, the feedback current by the switching operation is supplied from the current feedback winding n2 to the capacitor C3 through the diode D2 and the transistor Tr3, resulting in that the control power source voltage Vcc can be efficiently obtained.

After that, when the DC current path through the load terminal 3 and the semiconductor light-emitting element 4 is blocked due to break of a lead wire connecting the load terminal 3 to the semiconductor light-emitting element 4, connection failure of the load terminal 3, break in the semiconductor light-emitting element 4 or the like, the load connection detecting terminal E is opened and a base bias of the transistor Tr3 disappears, resulting in that the feedback current from the current feedback winding n2 is blocked and both the control circuit 5 and the control circuit 70 stop.

### (Third embodiment)

Fig. 6 shows an example of an illumination fixture using the lighting device of the present invention. This example is an integrated LED illumination fixture in which a power source unit 30 and an LED unit 40 are stored in a fixture main body 9. The electronic circuit including the load terminal 3 in Fig. 1 is mounted on the power source unit 30. The load terminal 3 of the power source unit 30 is connected to the LED unit 40 via an output wiring 34.

The fixture main body 9 is embedded in a ceiling 10. The fixture main body 9 is formed of a metal cylindrical body, a lower end of which is opened, and an lower end opened portion is covered with a light diffusing plate 91. The LED unit 40 is disposed as opposed to the light diffusing plate 91. 41 denotes an LED mounting substrate that mounts LEDs 4a to 4d in the LED unit 40. In this example, a heat radiating plate 92 thermally coupled to the fixture main body 9 is provided on the back side of the mounting substrate 41 of the LED unit 40 attached in the fixture. By radiating heat generated by the LEDs 4a to 4d through the heat radiating plate 92, temperature of the LEDs 4a to 4d is lowered, thereby advantageously increasing an optical output.

Although the LED unit 40 in which the four LEDs 4a to 4d are series-connected is used in the example shown in Fig. 6, in the lighting device in Fig. 1, the number of series-connected LEDs is not limited as long as the load voltage is lower than the voltage of the capacitor C1.

The lighting device of the present invention may be used in a separately-installed power source-type LED illumination fixture in which the power source unit 30 is separated from the LED unit 40. In this case, for example, since a first LED unit having four series-connected LEDs is cascade connected to a second LED unit having eight series-connected LEDs, the fixture can be lighted by output of one lighting device, reducing costs of the whole illumination system. The number of series-connected LEDs used in each LED unit is not limited.

### (Fourth embodiment)

The lighting device of the present invention may be used as a backlight of a liquid crystal display (including a liquid crystal television) and a light source for vehicles in addition to the lighting device for the illumination fixture. In the case of the lighting device for vehicles or the like, which is used in an environment with much vibration, a load release failure can occur due to vibration. Since the lighting device of the present invention can be shifted to the oscillation stop state even when the load release failure occurs, using the lighting device of the present invention can avoid excessive power consumption and circuit failure.

Any embodiment may be configured to turn on and off an alarm LED or keep the alarm LED on, or output an alarm signal such as alarm sound to the outside when the load connection detecting circuit does not detect load connection.

### [Description of Reference Numerals]

- 1: DC-DC converting circuit
- 2: Load connection detecting circuit
- 3: Load terminal
- 4: Semiconductor light-emitting element
- A, B: Input terminal
- C, D: Output terminal

## Claims

1. A lighting device comprising:
a DC-DC converting circuit (1) for converting a DC voltage between one input terminal (A) and another input terminal (B) and outputting the DC voltage between one output terminal (C) and another output terminal (D);
a smoothing capacitor (C2) between the output terminals (C, D) of the DC-DC converting circuit (1);
a DC current carrying element (R3) parallel-connected between the output terminals (C, D) and adapted to discharge a remaining charge in the smoothing capacitor (C2);
a load terminal (3) to which a semiconductor light-emitting element (4) lighted by a DC current supplied from the output terminals (C, D) is connected; the lighting device being **characterised in that** it further comprises: a load connection detecting circuit (2) adapted to detect the existence or the absence of load connection and which is connected between a connecting point (E) of the load terminal (3) and a rectifying element (D3), and the another input terminal (B), the load connection detecting circuit (2) forming a path for passing the DC current from the one input terminal (A) through the load terminal (3) and the semiconductor light-emitting element (4) to the another input terminal (B); and
the rectifying element (D3) is connected between the connecting point (E) and the DC current carrying element (R3) at the another output terminal (D), the rectifying element (3) blocking a path for passing the DC current from the one input terminal (A) to the load connection detecting circuit (2) through the DC current carrying element (R3).

2. The lighting device according to claim 1, wherein
the load connection detecting circuit (2) is a starting circuit for starting the DC-DC converting circuit (1) when the DC current passing through the semiconductor light-emitting element (4) is detected.

3. The lighting device according to claim 1 or 2, wherein
the load connection detecting circuit (2) is a stop circuit for stopping the DC-DC converting circuit (1) when the DC current passing through the semiconductor light-emitting element (4) is not detected.

4. The lighting device according to any of claims 1 to 3, wherein
the load connection detecting circuit (2) is a circuit for switching existence or absence of supply of a control power source voltage to the DC-DC converting circuit (1) according to existence or absence of the DC current passing through the semiconductor light-emitting element (4).

5. The lighting device according to any of claims 1 or 4, wherein
the load connection detecting circuit (2) is a control power source circuit (2c) for supplying a control power source voltage to the DC-DC converting circuit (1) using the DC current passing through the semiconductor light-emitting element (4) as a power source.

6. The lighting device according to claim 5, wherein
the control power source circuit (2c) has means adapted to use a feedback current from the DC-DC converting circuit as a power source and block the feedback current when the DC current passing through the semiconductor light-emitting element (4) is not detected during operation of the DC-DC converting circuit (1).

7. The lighting device according to any of claims 1 to 6, wherein
the DC voltage between the input terminals (A, B) is an output voltage of a step-up chopper circuit (7) and the load connection detecting circuit (2) controls start/stop of the step-up chopper circuit (7) according to existence or absence of the DC current passing through the semiconductor light-emitting element (4).

8. An illumination fixture comprising the lighting device according to any of claims 1 to 7.

## Patentansprüche

1. Beleuchtungsvorrichtung aufweisend:
einen Gleichspannungswandlerschaltkreis (1) zum Umwandeln einer Gleichspannung zwischen einem Eingangsanschluss (A) und einem anderen Eingangsanschluss (B) und zum Ausgeben der Gleichspannung zwischen einem Ausgangsanschluss (C) und einem anderen Ausgangsanschluss (D);
einen Glättungskondensator (C2) zwischen den Ausgangsanschlüssen (C, D) des Gleichspannungswandlerschaltkreises (1);
ein gleichstromführendes Element (R3), das zwischen den Ausgangsanschlüssen (C, D) parallel geschaltet ist und dazu eingerichtet ist, eine verbleibende Ladung in dem Glättungskondensator (C2) zu entladen;
einen Lastanschluss (3), an den ein Halbleiterleuchtelement (4) angeschlossen ist, das durch einen Gleichstrom zum Leuchten gebracht wird, der von den Ausgangsanschlüssen (C, D) bereitgestellt wird;
wobei die Beleuchtungsvorrichtung **dadurch gekennzeichnet ist, dass** sie außerdem aufweist:
einen Lastverbindungsdetektionsschaltkreis (2), der dazu eingerichtet ist, das Vorhandensein oder die Abwesenheit einer Lastverbindung zu detektieren und der zwischen einem Verbindungspunkt vom Lastanschluss (3) und einem Gleichrichterelement (D3) und dem anderen Eingangsanschluss (B) geschaltet ist, wobei der Lastverbindungsdetektionsschaltkreis (2) einen Pfad zum Durchlassen des Gleichstroms vom einen Eingangsanschluss (A) durch den Lastanschluss (3) und das Halbleiterleuchtelement (4) zu dem anderen Eingangsanschluss (B) bildet; und
wobei das Gleichrichterelement (D3) zwischen den Verbindungspunkt (E) und das gleichstromführende Element (R3) an dem anderen Ausgangsanschluss (D) zwischengeschaltet ist, wobei das Gleichrichterelement (3) einen Pfad zum Durchlassen des Gleichstroms von dem einen Eingangsanschluss (A) zu dem Lastverbindungsdetektionsschaltkreis (2) durch das gleichstromführende Element (R3) blockiert.

2. Beleuchtungsvorrichtung nach Anspruch 1, wobei der Lastverbindungsdetektionsschaltkreis (2) ein Startschaltkreis zum Starten des Gleichspannungswandlerschaltkreises (1) ist, wenn der Gleichstrom durch das Halbleiterleuchtelement (4) detektiert wird.

3. Beleuchtungsvorrichtung nach Anspruch 1 oder 2, wobei der Lastverbindungsdetektionsschaltkreis (2) ein Stopschaltkreis zum Stoppen des Gleichspannungswandlerschaltkreises (1) ist, wenn der durch das Halbleiterleuchtelement (4) hindurchgehende Gleichstrom nicht detektiert wird.

4. Beleuchtungsvorrichtung nach irgendeinem der Ansprüche 1 bis 3, wobei der Lastverbindungsdetektionsschaltkreis (2) ein Schaltkreis zum Umschalten des Vorhandenseins oder der Abwesenheit einer Zufuhr einer Steuerleistungsquellenspannung für den Gleichspannungswandlerschaltkreis (1) entsprechend des Vorhandenseins oder der Abwesenheit des Gleichstromes ist, der durch das Halbleiterleuchtelement (4) hindurchgeht.

5. Beleuchtungsvorrichtung nach irgendeinem der Ansprüche 1 oder 4, wobei der Lastverbindungsdetektionsschaltkreis (2) ein Steuerleistungsquellenschaltkreis (2c) ist, zur Zufuhr einer Steuerleistungsquellenspannung für den Gleichspannungswandlerschaltkreis (1) unter Verwendung des durch das Halbleiterleuchtelement (4) hindurchgehenden Gleichstromes als eine Leistungsquelle ist.

6. Beleuchtungsvorrichtung nach Anspruch 5, wobei der Steuerleistungsquellenschaltkreis (2c) Mittel aufweist, die dazu eingerichtet sind, einen Rückführstrom von dem Gleichspannungswandlerschaltkreis (1) als eine Leistungsquelle zu verwenden und den Rückführstrom zu blockieren, wenn der durch das Halbleiterleuchtelement (4) hindurchgehende Gleichstrom während des Betriebs des Gleichspannungswandlerschaltkreises (1) nicht detektiert wird.

7. Beleuchtungsvorrichtung nach irgendeinem der Ansprüche 1-6, wobei die Gleichspannung zwischen den Eingangsanschlüssen (A, B) eine Ausgangsspannung eines Hochsetzstellerschaltkreises (7) ist und der Lastverbindungsdetektionsschaltkreis (2) das Starten/Stoppen des Hochsetzstellerschaltkreises (7) entsprechend des Vorhandenseins oder der Abwesenheit des durch das Halbleiterleuchtelement (4) hindurchgehenden Gleichstromes steuert.

8. Beleuchtungsbefestigung aufweisend die Beleuchtungsvorrichtung nach irgendeinem der Ansprüche 1-7.

## Revendications

1. Dispositif d'éclairage comprenant :
un circuit de conversion continu-continu (1) pour convertir une tension continue entre une borne d'entrée (A) et une autre borne d'entrée (B) et délivrer en sortie la tension continue entre une borne de sortie (C) et une autre borne de sortie (D) ;
un condensateur de lissage (C2) entre les bornes de sortie (C, D) du circuit de conversion continu-continu (1) ;
un élément porteur de courant continu (R3) monté en parallèle entre les bornes de sortie (C, D) et adapté pour décharger une charge restante du condensateur de lissage (C2) ;
une borne de charge (3) à laquelle est connecté un élément luminescent à semiconducteur (4) allumé par un courant continu fourni par les bornes de sortie (C, D) ;
le dispositif d'éclairage étant **caractérisé en ce qu'**il comprend en outre :
un circuit de détection de connexion de charge (2) adapté pour détecter l'existence ou l'absence de connexion de charge et qui est connecté entre un point de connexion (E) de la borne de charge (3) et un élément de redressement (D3), et l'autre borne d'entrée (B), le circuit de détection de connexion de charge (2) formant un chemin pour faire passer le courant continu de la première borne d'entrée (A) à l'autre borne d'entrée (B) en passant par la borne de charge (3) et l'élément luminescent à semiconducteur (4) ; et
l'élément de redressement (D3) est connecté entre le point de connexion (E) et l'élément porteur de courant continu (R3) au niveau de l'autre borne de sortie (D), l'élément de redressement (3) bloquant un chemin servant à faire passer le courant continu de la première borne d'entrée (A) au circuit de détection de connexion de charge (2) à travers l'élément porteur de courant continu (R3).

2. Dispositif d'éclairage selon la revendication 1, dans lequel le circuit de détection de connexion de charge (2) est un circuit de démarrage pour amorcer le circuit de conversion continu-continu (1) quand le courant continu qui passe dans l'élément luminescent à semiconducteur (4) est détecté.

3. Dispositif d'éclairage selon la revendication 1 ou 2, dans lequel le circuit de détection de connexion de charge (2) est un circuit d'arrêt pour arrêter le circuit de conversion continu-continu (1) quand le courant continu qui passe dans l'élément luminescent à semiconducteur (4) n'est pas détecté.

4. Dispositif d'éclairage selon l'une quelconque des revendications 1 à 3, dans lequel le circuit de détection de connexion de charge (2) est un circuit servant à commuter l'existence ou l'absence d'alimentation d'une tension de source électrique de commande pour le circuit de conversion continu-continu (1) en fonction de l'existence ou de l'absence du courant continu qui passe dans l'élément luminescent à semiconducteur (4).

5. Dispositif d'éclairage selon l'une quelconque des revendications 1 ou 4, dans lequel le circuit de détection de connexion de charge (2) est un circuit de source électrique de commande (2c) pour fournir une tension de source électrique de commande au circuit de conversion continu-continu (1) en utilisant le courant continu qui passe dans l'élément luminescent à semiconducteur (4) comme source d'alimentation.

6. Dispositif d'éclairage selon la revendication 5, dans lequel le circuit de source électrique de commande (2c) comporte un moyen adapté pour utiliser un courant de rétroaction provenant du circuit de conversion continu-continu comme source d'alimentation et bloquer le courant de rétroaction quand le courant continu qui passe dans l'élément luminescent à semiconducteur (4) n'est pas détecté pendant le fonctionnement du circuit de conversion continu-continu (1).

7. Dispositif d'éclairage selon l'une quelconque des revendications 1 à 6, dans lequel la tension continue entre les bornes d'entrée (A, B) est une tension de sortie d'un circuit d'interruption périodique élévateur (7) et le circuit de détection de connexion de charge (2) commande le démarrage et l'arrêt du circuit d'interruption périodique élévateur (7) en fonction de l'existence ou de l'absence du courant continu qui passe dans l'élément luminescent à semiconducteur (4).

8. Accessoire d'éclairage comprenant le dispositif d'éclairage selon l'une quelconque des revendications 1 à 7.
